# EUROPÄISCHE PATENTSCHRIFT

(11) **EP 0 714 420 B1**
(45) Veröffentlichungstag und Bekanntmachung des Hinweises auf die Patenterteilung: **05.11.1997**
(21) Anmeldenummer: 94926164.8
(22) Anmeldetag: 08.08.1994
(51) Int. Cl.: C09D 5/02, A01N 43/12

(54) **SCHIMMELFESTE DISPERSIONSFARBENANSTRICHE**
MOULD-RESISTANT EMULSION PAINTS
PEINTURES EMULSIONS ANTIMOISISSURE

(30) Priorität: 20.08.1993 DE 4328074
(43) Veröffentlichungstag der Anmeldung: 05.06.1996
(73) Patentinhaber: BAYER AG, 51368 Leverkusen (DE)
(72) Erfinder: ELBE, Hans-Ludwig, D-42329 Wuppertal (DE); PAULUS, Wilfried, D-47800 Krefeld (DE); SCHRAGE, Heinrich, D-47800 Krefeld (DE); KUGLER, Martin, D-42799 Leichlingen (DE); KUNISCH, Franz, D-51519 Odenthal (DE)
(86) Internationale Anmeldenummer: EP9402627
(87) Internationale Veröffentlichungsnummer: WO9506091

(56) Entgegenhaltungen:
- EP-A- 0 512 349
- EP-A- 0 526 951

## Beschreibung

Die Erfindung betrifft schimmelfeste Dispersionsfarbenanstriche, die als Fungizid N-cydohexyl-benzothiophen-2-carboxamid-S,S-dioxid enthalten und dauerhaft, d.h. auch nach Exposition in warmer Umluft und Feuchtigkeit (Schwitzwasser oder Regen) oder nach thermischer Belastung, pilzfrei und farbstabil bleiben.

B enzothiophen-2-carboxarnid-S, S-dioxide (BCD's), ein Verfahren zu ihrer Herstellung und ihre fungizide Wirkung sind bekannt (DE-A-41 15 184). Beschrieben wird vor allem ihre Wirksamkeit gegen pflanzenschädigende Pilze und Dematophyten. Ferner wird angegeben, daß sich BCD's zum Schutze technischer Materialien vor mikrobieller Veränderung oder Zerstörung eignen. Als technische Materialien werden u.a. Anstrichmittel genannt. Die überwiegende Anzahl der beschriebenen BCD's setzen aber in alkalischen Medien, z.B. in Dispersionsfarben, hydrolytisch Anilinderivate frei, die bekanntlich stark zur Autoxydation neigen und sich dabei verfärben, so daß diese BCD's für die Verwendung als Anstrichfungizide in Dispersionsfarben nicht in Betracht kommen.

Überraschenderweise wurde nun gefunden, daß es unter den BCD's Substanzen gibt, deren Wirkungsspektrum so breit ist, daß davon nicht nur phytopathogene Pilze und Dermatophyten, sondern auch die üblicherweise auf Anstrichen wachsenden Schimmelpilzarten erfaßt werden. Diese Verbindungen sind überraschenerweise auch so hydrolyse- und farbstabil, daß sie sich hervorragend zur Herstellung schimmelfester Dispersionsfarben eignen. Gegenstand der Anmeldung sind daher Dispersionsfarben enthaltend N-Cyclohexyl-benzothiophen-2-carboxamid-S,S-dioxid.

Diese Verbindung zeichnet sich durch hohe Thermostabilität aus, so daß sie im Gegensatz zu den anderen BCD's und anderen handelsüblichen Fungiziden auch in Dispersionsfarben ohne Wirkungseinbuße verwendet werden kann, die zum Beschichten von Wärmedämmplatten dienen, wobei die beschichteten Platten durch einen Trockentunnel geführt und relativ hohen Temperaturen ausgesetzt werden.

Die Dispersionsfarben enthalten die erfindungsgemäß verwendbaren Anstrichfungizide dabei in Mengen von 0,05 - 5 %, vorzugsweise von 0,2 - 2 %, bezogen auf Filmgewicht.

Die erfindungsgemäß verwendbaren Anstrichfungizide werden in Dispersionsfarben auch zusammen mit anderen Wirkstoffen eingesetzt, beispielsweise zusammen mit Konservierungsstoffen zur Sicherung der Lagerstabilität der Dispersionsfarben, aber auch zusammen mit anderen Fungiziden und/oder Algiziden, Insektiziden, Molluskiziden.

Durch diese Wirkstoffkombinationen wird das Wirkungsspektrum des N-Cyclohexyl-benzothiophen-2-carboxamid-S,S-dioxids noch vergrößert oder es werden besondere Effekte erzielt. In vielen Fällen erhält man dabei synergistische Effekte. Wenn die Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden.

Bevorzugte Mischpartner sind dabei:

Triazole:
Amitrole, Azocyclotin, BAS 480F, Bitertanol, Difenoconazole, Fenbuconazole, Fenchlorazole, Fenethanil, Fluquinconazole, Flusilazole, Flutriafol, Imibenconazole, Isozofos, Myclobutanil, Metconazole, Epoxyconazole, Paclobutrazol, Penconazole, Propioconazole, (±)-cis-1-(4-chlorphenyl)-2-(1H-1,2,4-triazol-1-yl)-cycloheptanol, Tetraconazole, Triadimefon, Triadimenol, Triapenthenol, Triflumizole, Triticonazole, Uniconazole sowie deren Metallsalze und Säureaddukte.

Imidazole:
Imazalil, Pefurazoate, Prochloraz, Triflumizole, 2-(1-tert-Butyl)-1-(2-chlorphenyl)-3-(1,2,4-triazol-1-yl)-propan-2-ol, Thiazolcarboxanilide wie 2',6'-Dibromo-2-methyl-4-trifluoromethoxy-4'-trifluoromethyl-1,3-thiazole-5-carboxanilide sowie deren Metallsalze und Säureaddukte.
Methyl(E)-2-[2-[6-(2-cyanophenoxy)pyrimidin-4-yloxy]phenyl]3-methoxyacrylate, methyl(E)-2-[2-[6-(2-thioamidophenoxy)pyrimidin-4-yloxy]phenyl]-3 -methoxyacrylate,methyl(E)-2-[2-[6-(2-fluorophenoxy)pyrimidin-4-yloxy]phenyl]-3-methoxyacrylate,methyl(E)-2-[2-[6-(2,6-difluorophenoxy)pyrimidin-4-yloxy]phenyl]-3-methoxyacrylate,methyl(E)-2-[2-[3-(pyrimidin-2-yloxy)phenoxy]phenyl]-3-methoxyacrylate, methyl(E)-2-[2-[3-(5-methylpyrimidin-2-yloxy)-phenoxy]phenyl]-3-methoxyacrylate, methyl(E)-2-[2-[3-(phenyl-sulfonyloxy)phenoxy]phenyl]-3-methoxyacrylate, methyl(E)-2-[2-[3-(4-nitrophenoxy)phenoxy]phenyl]-3-methoxyacrylatqnethyl(E)-2-[2-phenoxyphenyl]-3-methoxyacrylate, methyl(E)-2-[2-(3 ,5-dimethylbenzoyl)pyrrol-1-yl]-3-methoxyacrylate, methyl(E)-2-[2-(3-methoxyphenoxy)phenyl]-.3-methoxyacrylate,methyl(E)-2-[2-(2-phenylethen-1-yl)-phenyl]-3-methoxyacrylate,methyl(E)-2-[2-(3,5-dichlorophenoxy)pyridin-3-yl]-3-methoxyacrylate, methyl(E)-2-(2-(3-(1,1,2,2-tetrafluoroethoxy)phenoxy)phenyl)-3 -methoxyacrylate, methyl(E)-2-(2-[3-(alphahydroxybenzyl)phenoxy]phenyl)-3 -methoxyacrylate, methyl(E)-2-(2-(4-phenoxypyridin-2-yloxy)phenyl)-3-methoxyacrylatemethyl(E)-2-[2-(3 -n-propyloxyphenoxy)-phenyl]3-methoxyacrylate, methyl(E)-2-[2-(3-isopropyloxyphenoxy)phenyl]-3-methoxyacrylate, methyl(E)-2-[2-[3-(2-fluorophenoxy)pehnoxy]phenyl]-3-methoxyacrylate, methyl(E)-2-[2-(3-ethoxyphenoxy)phenyl]-3-methoxyacrylatemethyl(E)-2-[2-(4-tert.-butylpyridin-2-yloxy)phenyl]-3-methoxyacrylate, methyl(E)-2-[2-[3-(3-cyanophenoxy)phenoxy]phenyl]-3-methoxyacrylate, methyl(E)-2-[2-(3-methylpyridin-2-yloxymethyl)phenyl]-3-methoxyacrylate, methyi(E)-2-[2-[6-(2-methylphenoxy)pyrimidin-4-yloxy]phenyl]-3-methoxyacrylate, methyl(E)-2-[2-(5-bromopyridin-2-yloxymethyl)phenyl]-3-methoxyacrylate, methyl(E)-2-[2-(3-(3-iodopyridin-2-yloxy)phenoxy)phenyl]-3-methoxyacrylate, methyl(E)-2-[2-[6-(2-chloropyridin-3-yloxy)pyrimidin-4-yloxy]phenyl]-3-methoxyacrylate, (E),(E)methyl-2-[2-(5,6-dimethylpyrazin-2-ylmethyloximinomethyl)phenyl]-3-methoxyacrylate(E)-methyl-2-(2-[6-(6-methylpyridin-2-yloxy)pyrimidin-4-yloxy]phenyl}-3-methoxyacrylate, (E),(E)methyl-2-{2-(3-methoxyphenyl)methyloximinomethyl]phenyl}-3-methoxyacrylate, (E)methyl-2-{(2-(6-(2-azidophenoxy)-pyrimidin4-yloxy]phenyl}3-methoxyacrylate,(E),(E)methyl-2-{2-[6-phenylpyrimidin4-yl)-methyloximinomethyl]phenyl}-3-methoxyacrylate, (E),(E)-methyl-2-{2-[(4-chlorophenyl)-methyloximinomethyl]phenyl}-3-methoxyacrylate, (E)methyl-2-{2-[6-(2-n-propylphenoxy)-1,3,5-triazin-4-yloxy]phenyl}-3-methoxyacrylate, (E),(E)methyl-2-{2-[(3-nitrophenyl)methyloximinomethyl]phenyl}-3-methoxyacrylate;

Succinat-Dehydrogenase Inhibitoren wie:
Fenfuram, Furcarbanil, Cyclafluramid, Furmecyclox, Seedvax, Metsulfovax, Pyrocarbolid, Oxycarboxin, Shirlan, Mebenil (Mepronil), Benodanil, Flutolanil (Moncut); Naphthalin-Derivate wie:
Terbinafine, Naftifine, Butenafine, 3-Chloro-7-(2-aza-2,7,7-trimethyl-oct-3-en-5-in); Sulfenamide wie Dichlofluanid, Tolylfluanid, Folpet, Fluorfolpet; Captan, Captofol; Benzimidazole wie Carbendazim, Benomyl, Furathiocarb, Fuberidazole, Thiophonatmethyl, Thiabendazole oder deren Salze;
Morpholinderivate wie Tridemorph, Fenpropimorph, Falimorph, Dimethomorph, Dodemorph; Aldimorph, Fenpropidin und ihre arylsulfonsauren Salze, wie z.B. p-Toluolsulfonsäure und p-Dodecylphenyl-sulfonsäure;

Dithiocarbamate, Cufraneb, Ferbam, Mancopper, Mancozeb, Maneb, Metam, Metiram, Thiram Zeneb, Ziram:
Benzthiazole wie 2-Mercaptobenzothiazol;
Benzamide wie 2,6-Dichloro-N-(4-trifluoromethylbenzyl)-benzamide; Borverbindungen wie Borsäure, Borsäureester, Borax;
Formaldehyd und Formaldehydabspaltende Verbindungen wie Benzylalkoholmono-(poly)-hemiformal, Oxazolidine, Hexa-hydro-S-triazine, N-Methylolchloracetamid, Paraformadehyd, Nitropyrin, Oxolinsäure, Tecloftalam;

Tris-N-(cyclohexyldiazeniumdioxy)-aluminium, N-(Cyclo-hexyldiazeniumdioxy)-tri-butylzinn bzw. K-Salze, Bis-N-(cyclohexyldiazeniumdioxy)-kupfer. N-Methylisothiazolin-3-on,5-Chlor-N-methylisothiazolin-3-on,4,5-Dichloro-N-octyl-isothiazolin-3-on, N-Octyl-isothiazolin-3-on, 4,5-Trimethylen-isothiazolinone, 4,5-Benzisothiazolinone, N-Methylolchloracetamid;
Aldehyde wie Zimtaldehyd, Formaldehyd, Glutardialdehyd, β-Bromzimtaldehyd; Thiocyanate wie Thiocyanatomethylthiobenzothiazol, Methylenbisthiocyanat, usw; quartäre Ammoniumverbindungen wie Benzyldimethyltetradecylammoniumchlorid, Benzyldimethyldodecylarnmoniumchlotld, Didecyldimethaylammoniumchlorid;
Iodderivate wie Diiodmethyl-p-tolylsulfon, 3-Iod-2-propinyl-alkohol, 4-Chlorphenyl-3-iodpropargylformal, 3-Brom-2,3-diiod-2-propenylethylcarbamat, 2,3,3-Triiodallylalkohol, 3-Brom-2,3-diiod-2-propenylalkohol, 3-Iod-2-propinyl-n-butylcarbamat, 3-Iod-2-propinyl-n-hexylcarbamat, 3-Iod-2-propinyl-cyclohexylcarbamat, 3-Iod-2-propinyl-phenylcarbamat;
Phenolderivate wie Tribromphenol, Tetrachlorphenol, 3-Methyl-4-chlorphenol, 3,5-Dimethyl-4-chlorphenol, Phenoxyethanol, Dichlorphen, o-Phenylphenol, m-Phenylphenol, p-Phenylphenol, 2-Benzyl-4-chlorphenol und deren Alkali- und Erdalkalimetallsalze.
Mikrobizide mit aktivierter Halogengruppe wie Chloracetamid, Bronopol, Bronidox, Tectamer wie 2-Brom-2-nitro-1,3-propandiol, 2-Brom-4'-hydroxy-acetophenon, 2,2-Dibrom-3-nitril-propionamid, 1,2-Dibrom-2,4-dicyanobutan, β-Brom-β-nitrostyrol;
Pyridine wie 1-Hydroxy-2-pyridinthion (und ihre Na-, Fe-, Mn-, Zn-Salze), Tetrachlor-4-methylsulfonylpyridin, Pyrimethanol, Mepanipyrim, Dipyrithion;
Metallseifen wie Zinn-, Kupfer-, Zinknaphtenat, -octoat, 2-ethylhexanoat, -oleat, -phosphat, -benzoat;
Metallsalze wie Kupferhydroxycarbonat, Natriumdichromat, Kaliumdichromat, Kaliumchromat, Kupfersulfat, Kupferchlorid, Kupferborat, Zinkfluorosilikat, Kupferfluorosilikat.

Oxide wie Tributylzinnoxid, Cu₂O, CuO, ZnO;
Dialkyldithiocarbamate wie Na- und Zn-Salze von Dialkyldithiocarbamaten, Tetramethylthiuramdisulfid, Kalium-N-methyl-dithiocarbamat;
Nitrilewie2,4,5,6-Tetrachlorisophthalodinitril,Dinatrium-cyano-dithioimidocarbamat; Chinoline wie 8-Hydroxychinolin und deren Cu-Salze;
Mucochlorsäure, 5-Hydroxy-2(5H)-furanon;
4,5-Dichlorodithiazolinon, 4,5-Benzdithiazolinon, 4,5-Trimethylendithiazolinon, 4,5-Dichlor-(3H)-1,2-dithiol-3-on, 3,5-Dimethyl-tetrahydro-1,3,5-thiadiazin-2-thion, N-(2-p-Chlorbenzoylethyl)-hexaminiumchloridKalium-N-hydroxymethyl-N'-methyldithiocarbamat,
2-Oxo-2-(4-hydroxy-phenyl)acethydroximsäure-chlorid,
Phenyl-(2-chlor-cyan-vinyl)sulfon,
Phenyl-(1,2-dichl or-2-cyan-vinyl)sulfon;
Ag, Zn oder Cu-haltige Zeolithe allein oder eingeschlossen in polymere Wirkstoffe; Ganz besonders bevorzugt sind Mischungen mit
   Azaconazole, Bromuconazole, Cyproconazole, Dichlobutrazol, Diniconazole, Hexaconazole, Metaconazole, Penconazole, Propiconazole, Tebuconazole, Methyl-(E)-methoximino[a-(o-tolyloxy)-o-tolyl)]acetate, Methyl-(E)-2-{2-[6-(2-cyanphenoxy)-pyrimidin-4-yl-oxy]phenyl}-3-methoxyacrylat, Methfuroxam, Carboxin, Fenpiclonil, 4-(2,2-Difluoro-1,3 -benzodioxol-4-yl)-1H-pyrrol-3-carbonitril, Butenafine, Imazalil, N-Methyl-isothiazolin-3-on, 5-Chlor-N-methylisothiazolin-3-on, N-Octylisothiazolin-3-on, Benzisothiazolinone, N-(2-Hydroxypropyl)-amino-methanol, Benzylalkohol-(hemi)-formal, Glutaraldehyd, Omadine, Dimethyldicarbonat, und/oder 3-Iodo-2-propinyl-n-butylcarbamate.

Desweiteren werden auch gut wirksame Mischungen mit den folgenden Wirkstoffen hergestellt:

### Fungizide:

Acypetacs, 2-Aminobutane, Ampropylfos, Anilazine, Benalaxyl, Bupirimate, Chinomethionat, Chloroneb, Chlozolinate, Cymoxanil, Dazomet, Diclomezine, Dichloram, Diethofencarb, Dimethirimol, Diocab, Dithianon, Dodine, Drazoxolon, Edifenphos, Ethirimol, Etridiazole, Fenarimol, Fenitropan, Fentin acetate, Fentin Hydroxide, Ferimzone, Fluazinam, Fluromide, Flusulfamide, Flutriafol, Fosetyl, Fthalide, Furalaxyl, Guazatine, Hymexazol, Iprobenfos, Iprodione, Isoprothiolane, Metalaxyl, Methasulfocarb, Nitrothal-isopropyl, Nuarimol, Ofurace, Oxadiyl, Perflurazoate, Pencycuron, Phosdiphen, Pimaricin, Piperalin, Procymidone, Propamocarb, Propineb, Pyrazophos, Pyrifenox, Pyroquilon, Quintozene, Tar Oils, Tecnazene, Thicyofen, Thiophanate-methyl, Tolclofos-methyl, Triazoxide, Trichlamide, Tricyclazole, Triforine, Vinclozolin.

### Insektizide:

Phosphorsäureester wie Azinphos-ethyl, Azinphos-methyl, α-1(4-Chlorphenyl)-4-(O-ethyl, S-propyl)phosphoryloxy-pyrazol, Chlorpyrifos, Coumaphos, Demeton, Demeton-S-methyl, Diazinon, Dichlorvos, Dimethoate, Ethoate, Ethoprophos, Etrimfos, Fenitrothion, Fenthion, Heptenophas, Parathion, Parathion-methyl, Phosalone, Phoxim, Pirimiphos-ethyl, Pirimiphos-methyl, Profenofos, Prothiofos, Sulfprofos, Triazophos und Trichlorphon;
Carbamate wie Aldicarb, Bendiocarb, α-2-(1-Methylpropyl)-phenylmethylcarbamat, Butocarboxim, Butoxycarboxim, Carbaryl, Carbofuran, Carbosulfan, Cloethocarb, Isoprocarb, Methomyl, Oxamyl, Pirimicarb, Promecarb, Propoxur und Thiodicarb;
Organosiliciumverbindungen,vorzugsweiseDimethyl(phenyl)silyl-methyl-3 -phenoxybenzylether wie Dimethyl-(4-ethoxyphenyl)-silylmethyl-3-phenoxybenzylether oder (Dimethylphenyl)-silyl-methyl-2-phenoxy-6-pyridylmethyletherwiez.B.Dimethyl-(9-ethoxy-phenyl)-silylmethyl-2-phenoxy-6-pyridylmethylether oder [(Phenyl)-3(3-phenoxyphenyl)-propyl](dimethyl)-silane wie z.B. (4-Ethoxyphenyl)-[3-(4-fluoro-3 -phenoxyphenyl-propyl]dimethyl-silan, Silafluofen;
Pyrethroide wie Allethrin, Alphamethrin, Bioresmethrin, Byfenthrin, Cycloprothrin, Cyfluthrin, Decamethrin, Cyhalothrin, Cypermethrin, Deltamethrin, Alpha-cyano-3-phenyl-2-methylbenzyl-2,2-dimethyl-3 -(2-chlor-2-trifluor-methylvinyl)cyclopropancarboxylat, Fenpropathrin, Fenfluthrin, Fenvalerate, Flucythrinate, Flumethrin, Fluvalinate, Permethrin, Resmethrin und Tralomethrin;
Nitroimine und Nitromethylene wie 1-[(6-Chlor-3-pyridinyl)-methyl]-4,5-dihydro-N-nitro-1H-imidazol-2-amin (Imidacloprid), N-[(6-Chlor-3-pyridyl)methyl-]N²-cyano-N¹-methylacetamide (NI-25);
Abamectin, AC 303, 630, Acephate, Acrinathrin, Alanycarb, Aldoxycarb, Aldrin, Amitraz, Azamethiphos, Bacillus thuringiensis, Phosmet, Phosphamidon, Phosphine, Prallethrin, Propaphos, Propetamphos, Prothoate, Pyraclofos, Pyrethrins, Pyridaben, Pyridafenthion, Pyriproxyfen, Quinalphos, RH-7988, Rotenone, Sodium fluoride, Sodium hexafluorosilicate, Sulfotep, Sulfuryl fluoride, Tar Oils, Teflubenzuron, Tefluthrin, Temephos, Terbufos, Tetrachlorvinphos, Tetramethrin, O-2-tert.-Butylpyrimidin-5-yl-o-isopropyl-phosphorothiate, Thiocyclam, Thiofanox, Thiometon, Tralomethrin, Triflumuron, Trimethacarb, Vamidothion, Verticillium Lacanii, XMC, Xylylcarb, Benfuracarb, Bensultap, Bifenthrin, Bioallethrin, MERbioallethrin (S)-cyclopentenyl isomer, Bromophos, Bromophos-ethyl, Buprofezin, Cadusafos, Calcium Polysulfide, Carbophenothion, Cartap, Chinomethionat, Chlordane, Chlorfenvinphos, Chlorfluazuron, Chlormephos, Chloropicrin, Chlorpyrifos, Cyanophos, Beta-Cyfluthrin, Alpha-cypermethrin, Cyophenothrin, Cyromazine, Dazomet, DDT, Demeton-S-methylsulphon, Diafenthiuron, Dialifos, Dicrotophos, Diflubenzuron, Dinoseb, Deoxabenzofos, Diaxacarb, Disulfoton, DNOC, Empenthrin, Endosulfan, EPN, Esfenvalerate, Ethiofencarb, Ethion, Etofenprox, Fenobucarb, Fenoxycarb, Fensulfothion, Fipronil, Flucycloxuron, Flufenprox, Flufenoxuron, Fonofos, Formetanate, Formothion, Fosmethilan, Furathiocarb, Heptachlor, Hexaflumuron, Hydramethylnon, Hydrogen Cyanide, Hydroprene, IPSP, Isazofos, Isofenphos, Isoprothiolane, Isoxathion, Iodfenphos, Kadethrin, Lindane, Malathion, Mecarbam, Mephosfolan, Mercurous, chloride, Metam, Metarthizium, anisopliae, Methacrifos, Methamidophos, Methidathion, Methiocarb, Methoprene, Methoxychlor, Methyl isothiocyanate, Metholcarb, Mevinphos, Monocrotophos, Naled, Neodiprion sertifer NPV, Nicotine, Omethoate, Oxydemeton-methyl, Pentachlorophenol, Petroleum oils, Phenothrin, Phenthoate, Phorate;

Molluscicides:
Fentinacetate, Metaldehyde, Methiocarb. Niclosamide, Thiodicarb, Trimethacarb;

Algicides:
Coppersulfate, Dichlororphen, Endothal, Fentinacetate, Quinoclamine;

Herbicides:

| | | |
|---|---|---|
| acetochlor | amitrole | dichlorprop |
| acifluorfen | ammonium sulfamate | dichlorprop-P |
| aclonifen | anilofos | diclofop |
| acrolein | asulam | diethatyl |
| alachlor | atrazine | difenoxuron |
| alloxydim | aziprotryne | difenzoquat |
| ametryn | benazolin | diflufenican |
| amidosulfuron | benfluralin | dimefuron |
| | benfuresate | dimepiperate |
| | bensulfuron | dimethachlor |
| | bensulide | dimethametryn |
| | bentazone | dimethipin |
| | benzofencap | dimethylarsinic acid |
| | benzthiazuron | dinitramine |
| | bifenox | dinoseb |
| | bilanafos | dinoseb acetate |
| | borax | dinoseb |
| | bromacil | dinoseb acetate |
| | bromobutide | dinoterb |
| | bromofenoxim | diphenamid |
| | bromoxynil | dipropetryn |
| | butachlor | diquat |
| | butamifos | dithiopyr |
| | butenachlor | diuron |
| | butralin | DNOC |
| | butylate | PPX-A788 |
| | carbetamide | DPX-E96361 |
| | CGA 184927 | DSMA |
| | chlormethoxyfen | eglinazine |
| | chloramben | endothal |
| | chlorbromuron | EPTC |
| | chlorbufam | esprocarb |
| | chlorflurenol | ethalfluralin |
| | chloridazon | ethidimuron |
| | chlorimuron | ethofumesate |
| | chlornitrofen | fenoxaprop |
| | chloroacetic acid | fenoxaprop-P |
| | achloropicrin | fenuron |
| | chlorotoluron | flamprop |
| | chloroxuron | flamprop-M |
| | chlorprepham | flazasulfuron |
| | chlorsulfuron | fluazifop |
| | chlorthal | fluazifop-P |
| | chlorthiamid | fluchloralin |
| | cinmethylin | flumeturon |
| | cinofulsuron | fluorocgycofen |
| | clethodim | fluoronitrofen |
| | clomazone | flupropanate |
| | clomeprop | flurenol |
| | clopyralid | fluridone |
| | cyanamide | flurochloridone |
| | cyanazine | fluroxypyr |
| | cycloate | fomosafen |
| | cycloxydim | fosamine |
| | 2,4-D | furyloxyfen |
| | daimuron | glufosinate |
| | dalapon | glyphosate |
| | dazomet | haloxyfop |
| | 2,4-DB | hexazinone |
| | desmedipham | imazamethabenz |
| | desmetryn | imazapyr |
| | dicamba | imazaquin |
| | dichlobenil | imazethapyr |
| | isoproturon | ioxynil |
| | isouron | isopropalin |
| | isoxaben | propyzamide |
| | isoxapyrifop | prosulfocarb |
| | lactofen | pyrazolynate |
| | lenacil | pyrazosulfuron |
| | linuron | pyrazoxyfen |
| | LS830556 | pyributicarb |
| | MCPA | pyridate |
| | MCPA-thioethyl | quinclorac |
| | MCPB | quinmerac |
| | mecoprop | quinoclamine |
| | mecoprop-P | quizalofop |
| | mefenacet | quzizalofop-P |
| | mefluidide | S-23121 |
| | metam | sethoxydim |
| | metamitron | sifuron |
| | metazachlor | simazine |
| | methabenzthiazuron | simetryn |
| | methazole | SMY 1500 |
| | methoprotryne | sodium chlorate |
| | methyldymron | sulfometuron |
| | methylisothiocyanate | tar oils |
| | metobromuron | TCA |
| | metolachlor | tebutam |
| | metoxuron | tebuthiuron |
| | metribzin | terbacil |
| | metsulfuron | terbumeton |
| | molinate | terbuthylazine |
| | monalide | terbutryn |
| | monolinuron | thiazafluron |
| | MSMA | thifensulfuron |
| | naproanilide | thiobencarb |
| | napropamide | thiocarbazil |
| | naptalam | tioclorim |
| | neburon | tralkoxydim |
| | nicosulfuron | tri-allate |
| | nipyraclofen | triasulfuron |
| | norflurazon | tribenzuron |
| | orbencarb | triclopyr |
| | oryzalin | tridiphane |
| | oxadiazon | trietazine |
| | oxyfluorfen | trifluralin |
| | paraquat | UBI-C4874 |
| | pebulate | vernolate |
| | pendimethalin | |
| | pentachlorophenol | |
| | pentanochlor | |
| | petroleum oils | |
| | phenmedipham | |
| | picloram | |
| | piperophos | |
| | pretilachlor | |
| | primisulfuron | |
| | prodiamine | |
| | proglinazine | |
| | prometon | |
| | prometryn | |
| | propachlor | |
| | propanil | |
| | propaquizafop | |
| | propazine | |
| | propham | |

Die Gewichtsverhältnisse der Wirkstoffe in diesen Wirkstoffkombinationen können in relativ großen Bereichen variiert werden.

Vorzugsweise erhalten die Wirkstoffkombinationen den Wirkstoff zu 0,1 bis 99,9 %, insbesondere zu 1 bis 75 %, besonders bevorzugt 5 bis 50 %, wobei der Rest zu 100 % durch einen oder mehrere der obengenannten Mischungspartner ausgefüllt wird.

Unter Dispersionsfarben werden wäßrige, alkalisch eingestellte Anstrichmittel auf Basis von Polymerdispersionen, die als Bindemittel dienen, verstanden. Häufig zur Herstellung von Dispersionsfarben verwandte Polymerdispersionen enthalten beispielsweise Polyacrylate, Styrolacrylate, Polyvinylacetat, Polyvinylpropionat u.a. Polymere. Die beigefügten Rezepturen A, B und C geben beispielhaft Aufschluß über die Zusammensetzung von Dispersionsfarben.

Dispersionsfarbenanstriche verpilzen in feuchter Umgebung, z.B. in den Tropen, aber auch in Feuchträumen, der Lebensmittel- oder Textilindustrie, in Bädern, Saunen u.ä. Einrichtungen, innerhalb weniger Monate, d.h. eine große Zahl verschiedener Pilzarten breitet sich auf den Anstrichen aus. Ein Verpilzen der Anstriche kann aber dauerhaft mittels Einarbeitung, z.B. durch Anreiben mit den Pigmenten eines geeigneten Fungizids in die Anstrichmittel verhindert werden. An solche Anstrichfungizide für Dispersionsfarben stellt der Fachmann folgende Anforderungen:
breites Wirkungsspektrum
praktisch unlöslich in Wasser
nicht flüchtig
nicht verfärbend
nicht geruchsbelästigend
geringe Toxizität/Ökotoxizität

Die erfindungsgemäßen Substanzen erfüllen diese Anforderungen in hohem Maße. Damit stehen erstmals Anstrichfungizide zur Verfügung, die effektiv in Dispersionsfarben ohne Probleme angewand werden können.

Die nachfolgenden Beispiele dienen zur Verdeutlichung der Erfindung. Die Erfindung ist aber nicht auf die Beispiele beschränkt.

Zur Prüfung von Dispersionsfarbenanstrichen auf Schimmelfestigkeit wird wie folgt verfahren:

Das zu prüfende Anstrichmittel wird beidseitig auf eine geeignete Unterlage gestrichen.

Um praxisnahe Ergebnisse zu erhalten, wird ein Teil der Prüflinge vor dem Test auf Schimmelfestigkeit mit fließendem Wasser (24 h; 20°C) ausgelaugt; ein anderer Teil wird mit einem warmen Frischluftstrom behandelt (7 Tage; 40°C).

Die so vorbereiteten Prüflinge werden auf einen Agar-Nährboden gelegt. Prüflinge und Nährboden werden mit Pilzsporen kontaminiert. Nach 2- bis 3wöchiger Lagerung bei 29 + 1°C und 80 bis 90 % rel. Luftfeuchte wird abgemustert. Der Anstrich ist dauerhaft schimmelfest, wenn der Prüfling pilzfrei bleibt oder höchstens einen geringen Randbefall erkennen läßt.

Zur Kontamination werden Pilzsporen folgender Schimmelpilze verwendet, die als Anstrichzerstörer bekannt sind oder häufig auf Anstrichen angetroffen werden:
1. Alternaria tenuis
2. Aspergillus flavus
3. Aspergillus niger
4. Aspergillus ustus
5. Cladosporium herbarum
6. Paecilomyces variotii
7. Penicillium citrinum
8. Aureobasidium pullulans
9. Stachybotrys atra Corda

### Beispiel 1

Schimmelfest sind Anstriche gemäß Rezeptur A nach Auslaugung und Windkanalexposition, wenn sie
0,6 % N-Cyclohexyl-benzothiophen-2-carboxunid-S,S-dioxid
enthalten.

Die Anilid-haltigen Anstriche sind jedoch gelb verfärbt.

### Beispiel 2

Schimmelfest sind Anstriche gemäß Rezeptur B nach Auslaugung und Windkanalexposition, wenn sie
0,3 bis 0,6 % N-Cyclohexyl-benzothiophen-2-carboxamid-S,S-dioxid
enthalten.

Die Anilid-haltigen Anstriche sind jedoch gelb verfärbt.

### Beispiel 3

Schimmelfest sind Anstriche gemäß Rezeptur C nach Auslaugung und Windkanalexposition, wenn sie
0,3 bis 0,6 % N-Cyclohexyl-benzothiophen-2-carboxamid-S,S-dioxid
enthalten.

### REZEPTUR A:

| **AUßEN** dispersionsfarbe auf Basis von **Acronal 290 D (Styrolacrylat)** | | |
|---|---|---|
| Handelsname | Gew.- Teile | chemische Bezeichnung |
| | | |
| Bayer Titan RKB2 | 40 | Titandioxid |
| Talkum V58 neu | 10 | Magnesiumsilikat wasserhaltig |
| Durcal 5 | 45 | Calcit CaCO₃ |
| Walsroder MC 3000 S 2 %ig | 30 | Methylcellulose |
| H₂O | 6,5 | dest. Wasser |
| Calgon N 10 %ig | 3 | Polyphosphat |
| Pigmentverteiler A 10 %ig | 1 | Polyacrylsäuresalz |
| Agitan 281, 1:1 in Texanol | 1 | |
| Testbenzin | 5 | verschiedene aliphatische Kohlenwasserstoffe |
| Butylglykolacetat | 1,5 | Butylglykolacetat |
| Acronal 290 D (Bindem.) | 71 | Polyacrylsäureester |
| | | |
| Gesamt | 219,0 | |
| Feststoffgehalt: 135,5 = 61,6 % | | |

### REZEPTUR B:

| AUßENdispersionsfarbe auf Basis von **Mowilith DM 2H (Polyvinylacetat)** | | |
|---|---|---|
| Handelsname | Gew.- Teile | chemische Bezeichnung |
| | | |
| Bayer Titan RKB2 | 35 | Titandioxid |
| EWO-Pulver | 20 | Schwerspat (BaSO₄) |
| Micro-Mica | 15 | Magnesiumaluminiumsilikat |
| Talkum | 5 | Magnesiumsilikat wasserhaltig |
| Kreide BLP2 | 25 | Calcit (CaCO₃) |
| Mowilith DM 2H (Bindem.) | 80 | Polyvinylacetat |
| Tylose MH 2000 K | 20 | Methylhydroxyethylcellulose |
| Calgon N 10 %ig | 2,5 | Polyphosphat |
| Pigmentverteiler A 10 %ig | 2,5 | Polyacrylsäuresalz |
| H₂O | 5,0 | dest. Wasser |
| | | |
| Gesamt | 210,0 | |
| Feststoffgehalt: 140 = 66 % | | |

### REZEPTUR C:

| **AUßEN**dispersionsfarbe auf Basis von **Propiofan 590 D (Polyvinylpropionat)** | | |
|---|---|---|
| Handelsname | Gew.- Teile | chemische Bezeichnung |
| | | |
| Bayer Titan RKB2 | 35 | Titandioxid |
| EWO-Pulver | 10 | Schwerspat (BaSO₄) |
| Micro-Mica | 10 | Magnesiumaluminiumsilikat |
| Talkum AT 1 | 5 | Magnesiumsilikat wasserhaltig |
| Kreide BLP2 | 15 | Calcit (CaCO₃) |
| Blanc fix | 25 | Schwerspat (BaSO₄) künstlich hergestellt |
| Propiofan 590 D (Bindem.) | 50 | Polyvinylpropionat |
| Tylose MH 2000 K | 20 | Methylhydroxyethylcellulose |
| Calgon N 10 %ig | 2,5 | Polyphosphat |
| Pigmentverteiler A 10 %ig | 2,5 | Polyacrylsäuresalz |
| H₂O | 3,0 | dest. Wasser |
| | | |
| Gesamt | 178,0 | |
| Feststoffgehalt: 125 = 70 % | | |

## Patentansprüche

1. Dispersionsfarben enthaltend N-Cyclohexyl-benzothiophen-2-carboxamid-S,S-dioxid.

2. Dispersionsfarben gemäß Anspruch 1, enthaltend zusätzlich mindestens ein weiteres Fungizid, Molluskizid, Algizid, Insektizid und/oder Herbizid.

3. Verwendung von N-Cyclohexyl-benzothiophen-2-carboxamid-S,S-dioxid zum Schutz von Dispersionsfarbanstrichen gegen Verpilzung.

4. Verfahren zum Schutz von Dispersionsfarbanstrichen, dadurch gekennzeichnet, daß man Dispersionsfarben mit einem Wirkstoff oder einer Wirkstoffkombination nach den Ansprüchen 1 oder 2 behandelt oder versetzt.

5. Verwendung von N-Cyclohexyl-benzothiophen-2-carboxamid-S,S-dioxid zur Herstellung von Dispersionsfarben.

## Claims

1. Emulsion paints comprising N-cyclohexyl-benzothiophene-2-carboxamide S,S-dioxide.

2. Emulsion paints according to Claim 1, additionally comprising at least one further fungicide, molluscicide, algicide, insecticide and/or herbicide.

3. Use of N-cyclohexyl-benzothiophene-2-carboxamide S,S-dioxide for protecting coats of emulsion paint against fungal infestation.

4. Method of protecting coats of emulsion paint, characterized in that emulsion paints are treated with or have added to them an active ingredient or a combination of active ingredients according to Claim 1 or 2.

5. Use of N-cyclohexyl-benzothiophene-2-carboxamide S,S-dioxide for the preparation of emulsion paints.

## Revendications

1. Peintures-émulsions contenant du N-cyclohexylbenzothiophène-2-carboxamide-S, S-dioxyde.

2. Peintures-émulsions selon la revendication 1, contenant en outre au moins un fongicide, un mollusquicide, un algicide, un insecticide et/ou un herbicide supplémentaire.

3. Utilisation du N-cyclohexyl-benzothiophène-2-carboxamide-S,S-dioxyde pour protéger des enduits à base de peintures-émulsions contre la formation de moisissures.

4. Procédé pour protéger des enduits à base de peintures-émulsions, caractérisé en ce qu'on traite des peintures-émulsions avec ou on leur ajoute une substance active ou une combinaison de substances actives selon les revendications 1 ou 2.

5. Utilisation du N-cyclohexyl-benzothiophène-2-carboxamide-S,S-dioxyde pour la préparation de peintures-émulsions.
